# EUROPÄISCHE PATENTSCHRIFT

(11) **EP 3 643 472 B1**
(45) Veröffentlichungstag und Bekanntmachung des Hinweises auf die Patenterteilung: **02.08.2023**
(21) Anmeldenummer: 19000478.8
(22) Anmeldetag: 21.10.2019
(51) Int. Cl.: B29C 33/00, B29C 33/56, B29C 33/52, B29C 33/38

(54) **HERSTELLUNG VON SPRITZGUSSTEILEN IN EINMALFORMEN**
MANUFACTURE OF INJECTION MOULDED PARTS IN UNIQUE MOULDS
FABRICATION DE PIÈCES MOULÉES PAR INJECTION DANS LES MOULES À USAGE UNIQUE

(30) Priorität: 24.10.2018 DE 102018126504
(43) Veröffentlichungstag der Anmeldung: 29.04.2020
(73) Patentinhaber: FIT AG, 92331 Lupburg (DE)
(72) Erfinder: Fruth, Carl, 92331 Lupburg (DE)
(74) Vertreter: Schneider, Andreas

(56) Entgegenhaltungen:
- WO-A1-2017/157851
- DE-A1-102014 119 736
- JP-A- H01 269 511
- JP-A- S63 236 609

## Beschreibung

Die Erfindung betrifft die Herstellung von Spritzgußbauteilen in Einmalformen.

Beim Spritzgießen, nachfolgend als Spritzguß bezeichnet, wird das Spritzgußmaterial verflüssigt (plastifiziert) und unter Druck in eine Spritzgußform (Werkzeug) eingespritzt. Anschließend kühlt das Material in der Spritzgußform ab. Das entstandene Spritzgußbauteil (Formteil) kann anschließend aus der Spritzgußform entnommen werden. Der Hohlraum (Kavität) der Spritzgußform bestimmt dabei die Form des fertigen Bauteils.

Die heute geläufigen Spritzgießverfahren dienen in der Regel dazu, identische Formteile in großer Stückzahl kostengünstig herzustellen. Aufgrund der hohen Kosten für die Spritzgußform ist dabei die Schwelle der Wirtschaftlichkeit oftmals erst bei einigen tausend Teilen erreicht. Auf der anderen Seite können Spritzgußformen für die Herstellung von bis zu einigen Millionen Teilen verwendet werden.

Aufgrund der steigenden Kundennachfrage nach individuell konfigurierten Produkten, die exakt auf die eigenen Wünsche zugeschnitten sind, spielen Einzel- bzw. Sonderanfertigungen in der Produktion eine immer größere Rolle.

Es ist bis heute noch kein Verfahren bekannt, mit dessen Hilfe eine kostengünstige Herstellung von Spritzgußbauteilen in geringer Stückzahl, insbesondere als Einzelanfertigung (Losgröße 1), möglich ist. Die Produktionskosten für Spritzgußbauteile, die mittels individuell angefertigter, lediglich einmal verwendbarer Formen (Einmalformen) hergestellt sind, sind sehr hoch. Der Einsatz der Spritzgußtechnik ist daher in solchen Fällen in der Regel unwirtschaftlich. Es wird dann auf alternative Herstellungsverfahren ausgewichen, so daß die speziellen Vorteile des Spritzgießens, insbesondere die nahezu freie Wahl von Form und Oberflächenstruktur sowie die erzielbare hohe Präzision, nicht zum Tragen kommen.

WO2017/157851A1 beschreibt eine Vorrichtung zur Herstellung einer Einmalform für einen Spritzgußvorgang. Die Form kann aus mehreren Schichten bestehen, wobei eine Hülle sowie eine Hüllenverstärkung gebildet werden kann und die Hülle aus einem löslichen Material bestehen kann, in dem sich das Spritzgußmaterial nicht auflöst.

Eine Aufgabe der vorliegenden Erfindung ist es, eine Technik bereitzustellen, die es ermöglicht, individuelle Spritzgußbauteile kostengünstig herzustellen.

Diese Aufgabe wird durch die Gegenstände der unabhängigen Ansprüche gelöst. Vorteilhafte Ausführungen der Erfindung sind in den Unteransprüchen angegeben.

Die im Folgenden im Zusammenhang mit den Verfahren erläuterten Vorteile und Ausgestaltungen gelten sinngemäß auch für die erfindungsgemäßen Vorrichtungen sowie Gegenstände und umgekehrt.

Der gemeinsame Grundgedanke aller Gegenstände der unabhängigen Ansprüche besteht in der Verwendung einer speziellen Spritzgußform, die eine Hülle und eine die Hülle mechanisch verstärkenden Hüllenverstärkung aufweist, wobei die Hülle vollständig oder teilweise individuell erstellt ist, vorzugsweise unter Verwendung eines additiven Fertigungsverfahrens. Unter Verwendung dieser Spritzgußform wird das Spritzgußbauteil hergestellt. Anschließend erfolgt das Entformen des Bauteils. Analog dem zweistufigen Aufbau der Spritzgußform erfolgt auch das Entformen zweistufig. Dabei wird zunächst die Hüllenverstärkung entfernt, und zwar durch ein Abschmelzen des Verstärkungsmaterials, bevor anschließend die Hülle oder Teilhülle entfernt wird, und zwar durch ein Auflösen des Hüllenmaterials in einem Lösungsmittel. Wesentlich bereits bei dem Erstellen der Spritzgußform ist es, daß das Hüllenmaterial in einem Lösungsmittel auflösbar ist, in welchem sich das Spritzgußmaterial nicht oder nur sehr viel schwerer auflöst, und daß das Verstärkungsmaterial einen niedrigeren Schmelzpunkt aufweist als das Spritzgußmaterial. Damit wird sichergestellt, daß das Spritzgußbauteil bei dem Entformvorgang nicht beschädigt wird. Das für die Hüllenverstärkung verwendete Material kann nach dem Abschmelzen aufgefangen und wiederverwendet werden. Somit muß lediglich für den inneren Teil der Spritzgußform, die Hülle, jeweils neues Material verwendet werden. Da die Hülle vor ihrem Einsatz verstärkt wird, muß sie selbst nur eine minimale Dicke aufweisen. Der für den Aufbau der Hülle benötigte Materialaufwand ist daher sehr gering. Dadurch kann die Spritzgußform, also das Element, dessen Herstellung typischerweise mit sehr hohen Kosten verbunden ist, sehr preiswert erstellt werden.

Mit der Erfindung wird eine Technik bereitgestellt, mit der es möglich ist, auf einfache und vergleichsweise kostengünstige Weise ein vollständig individualisierbares Spritzgußbauteil oder ein teilweise individualisierbares Spritzgußbauteil herzustellen, je nachdem, ob zuvor die gesamte Hülle oder nur ein Teil der Hülle individuell angefertigt ist. Dabei stellt bereits die Verwendung einer Einmal-Spritzgußform an sich eine Innovation dar.

Ein Ausführungsbeispiel der Erfindung wird nachfolgend anhand der Zeichnungen näher erläutert. Hierbei zeigen:

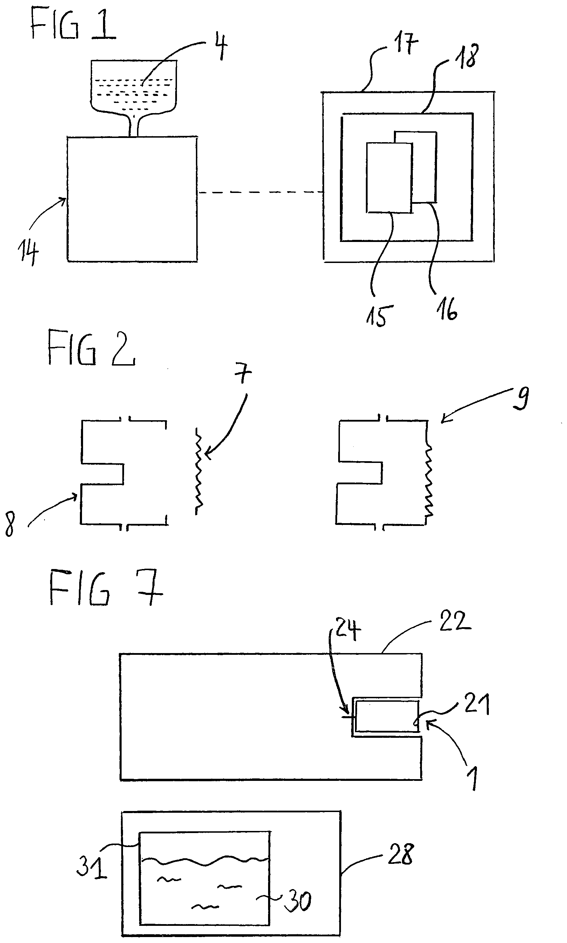

- Fig. 1: eine Anlage zur additiven Fertigung mit Steuereinheit,
- Fig. 2: eine teilindividualisierte Hülle, links mit getrennter und rechts mit montierter Teilhülle,

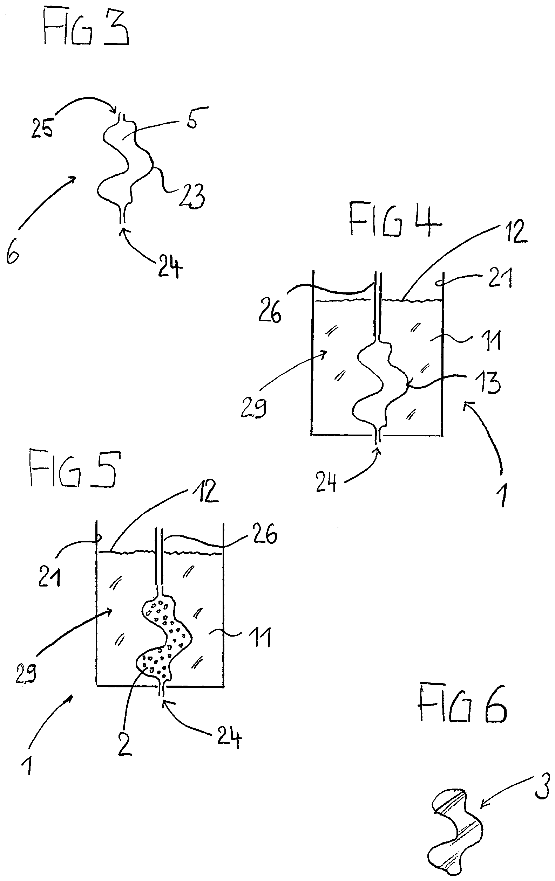

- Fig. 3: eine vollständig individualisierte Hülle,
- Fig. 4: eine Einmalform mit Hülle und Hüllenverstärkung, vor dem Spritzgußvorgang,
- Fig. 5: eine Einmalform mit Hülle und Hüllenverstärkung, während des Spritzgußvorgangs,
- Fig. 6: ein fertig entformtes Spritzgußbauteil,
- Fig. 7: eine Spritzgußvorrichtung und eine Anlage zum Entformen.

Sämtliche Figuren zeigen die Erfindung nicht maßstabsgerecht, dabei lediglich schematisch und nur mit ihren wesentlichen Bestandteilen. Gleiche Bezugszeichen entsprechen dabei Elementen gleicher oder vergleichbarer Funktion.

Das nachfolgend beschriebene Verfahren dient zur Herstellung einer Einmalform 1 für einen Spritzgußvorgang, bei welchem Spritzgußvorgang unter Verwendung eines Spritzgußmaterials 2 ein Spritzgußbauteil 3 hergestellt wird. Das Verfahren umfaßt zwei Teilschritte.

In einem ersten Teilschritt wird entweder aus einem löslichen Hüllenmaterial 4 eine die Kavität 5 für ein Spritzgußbauteil 3 bildende Hülle 6 erstellt oder es wird aus einem löslichen Hüllenmaterial 4 ein Teil 7 einer die Kavität 5 für ein Spritzgußbauteil 3 bildenden Hülle 9 erstellt und anschließend erfolgt das Erstellen der Hülle 9 unter Verwendung dieser Teilhülle 7. Dabei ist das Hüllenmaterial 4 in einem Lösungsmittel 30 auflösbar, in dem sich das Spritzgußmaterial 2 nicht auflöst.

In einem zweiten Teilschritt wird aus einem schmelzbaren Verstärkungsmaterial 11 eine die Hülle 6, 9 im wesentlichen vollständig umschließende Hüllenverstärkung 12 erstellt, wobei das Verstärkungsmaterial 11 einen niedrigeren Schmelzpunkt aufweist als das Spritzgußmaterial 2.

Die feste Hülle 6, 9 (Formhülle) wird dabei so definiert und aufgebaut, daß sie die äußere Form des späteren Spritzgußbauteils 3 definiert bzw. das spätere Spritzgußbauteil 3 umhüllt. Dabei ist entweder die gesamte Hülle 6, zumindest aber ein Hüllenteil 7 individuell, d.h. im Sinne einer Einzelanfertigung (Losgröße 1) angefertigt. Mit anderen Worten ist entweder das ganze Bauteil 3 individualisiert, d.h. es handelt sich um ein vollständig individualisiertes Einzelstück, oder aber es soll lediglich ein Teil des durch Spritzguß herzustellenden Bauteils 3 individuell angefertigt werden, beispielsweise ein Namensschild, ein Markenlabel oder dergleichen, während die übrigen Teile des Bauteils 3 gleich bleiben.

Die Hülle 6, 9 wird entweder vollständig oder teilweise aus einem löslichen Hüllenmaterial 4 aufgebaut, d.h. das für die gesamte Hülle 6 oder die Teilhülle 7 verwendete Hüllenmaterial 4 ist in einem vorzugsweise flüssigen Lösungsmittel 30, wie beispielsweise Natronlauge, Wasser oder dergleichen auflösbar. Dabei handelt es sich stets um ein Lösungsmittel 30, in dem sich das Spritzgußmaterial 2 nicht oder aber nur sehr viel schwerer als das Hüllenmaterial 4 auflöst. Das Hüllenmaterial 4 ist so gewählt, daß es sich in dem Lösungsmittel 30 leicht auflöst. Zugleich ist das Hüllenmaterial 4 so gewählt, daß es sich in dem Lösungsmittel 30 vorzugsweise vollständig oder aber nahezu vollständig auflöst.

Es gibt somit stets eine erste zu beachtende Materialpaarung, bestehend aus dem beim Aufbau der Hülle 6 bzw. der Teilhülle 7 verwendeten Hüllenmaterial 4 einerseits und dem für die Herstellung des Spritzgußbauteils 3 verwendeten Spritzgußmaterials 2 andererseits. Dabei können im Sinne dieser Materialpaarung mehrere verschiedene Hüllenmaterialien 4 ein und demselben Spritzgußmaterial 2 zugeordnet sein, ebenso wie ein und dasselbe Hüllenmaterial 4 mehreren Spritzgußmaterialien 2 zugeordnet sein kann. Diese jeweils in einer Paarung zusammenwirkenden Materialien 2, 4 sind hinsichtlich ihrer Löslichkeit aufeinander abgestimmt. Genauer gesagt ist die Löslichkeit des Hüllenmaterials 4 in ein und demselben Lösungsmittel 30 unter den gleichen Bedingungen deutlich größer, vorzugsweise mindestens um den Faktor 2 größer als die Löslichkeit des eingesetzten Spritzgußmaterials 2. Ganz besonders vorteilhaft ist es, wenn die Löslichkeit des Hüllenmaterials 4 mindestens um den Faktor 10 größer ist als die Löslichkeit des Spritzgußmaterials 2.

Bei dem Hüllenmaterial 4 handelt es sich beispielsweise um in Natronlauge lösbares Photopolymer. Der Schmelzpunkt des Hüllenmaterials 4 ist vorteilhafterweise so hoch, daß es die erhöhte Temperatur während des Spritzgußvorgangs aushält.

Wird lediglich ein Hüllenteil 7 erstellt, dann wird dieses Hüllenteil 7 zur Erzeugung einer vollständigen Hülle 9 verwendet. Die individualisierte Teilhülle 7 wird zu diesem Zweck unter Anwendung geeigneter Verbindungsmittel mit einer Grundhülle 8 (Dauerwerkzeug) kombiniert. Typischerweise ergänzt die individuelle Teilhülle 7 die standardisierte, mehrfach verwendbare Grundhülle 8, so daß sich durch die Kombination beider Hüllenelemente 7, 8, in der Regel durch Anbringen der Teilhülle 7 an der Grundhülle 8, die gewünschte vollständige, teilindividualisierte Hülle 9 ergibt. Es kann auch vorgesehen sein, daß mehrere individualisierte Hüllenteile 7 erstellt und allein oder in Verbindung mit einer Grundhülle 8 zur Erstellung der Gesamthülle 9 verwendet werden.

Die so erstellte vollständige Hülle 6, 9 wird in einem Folgeschritt mit einer Hüllenverstärkung 12 versehen. Nach dem Erstellen der Hüllenverstärkung 12 liegt diese vorzugsweise an der Außenseite 13 der Hülle 6, 9 an, so daß die Hülle 6, 9 mechanisch verstärkt ist. Die Hülle 6, 9 wird mit anderen Worten von der Hüllenverstärkung 12 im wesentlichen vollständig umschlossen. Das verwendete Verstärkungsmaterial 11 ist schmelzbar, d.h. bei Überschreiten einer definierten Temperatur (Schmelztemperatur) schmelzend.

Das zum Erstellen der Hüllenverstärkung 12 verwendete schmelzbare Verstärkungsmaterial 11 schmilzt bei einer niedrigeren Temperatur als das Spritzgußmaterial 2. Mit anderen Worten ist es derart niedrigschmelzend, daß es einen niedrigeren Schmelzpunkt als das Spritzgußmaterial 2 hat. So wird das aus dem höherschmelzenden Spritzgußmaterial 2 hergestellte Spritzgußbauteil 3 beim Entformen nicht angegriffen und bleibt unbeschädigt. Aus Gründen der Prozeßsicherheit ist das Verstärkungsmaterial 11 zugleich so gewählt, daß es bei Erreichen einer definierten niedrigen Temperatur vorzugsweise vollständig oder aber nahezu vollständig abschmilzt.

Es gibt somit stets eine zweite zu beachtende Materialpaarung, bestehend aus dem beim Aufbau der Hüllenverstärkung 12 verwendeten Verstärkungsmaterial 11 einerseits und dem beim Spritzgußvorgang verwendeten Spritzgußmaterial 2 andererseits. Dabei können im Sinne dieser Materialpaarung mehrere verschiedene Verstärkungsmaterialien 11 ein und demselben Spritzgußmaterial 2 zugeordnet sein, ebenso wie ein und dasselbe Verstärkungsmaterial 11 mehreren Spritzgußmaterialien 2 zugeordnet sein kann. Diese jeweils in einer Paarung zusammenwirkenden Materialien 2, 11 sind hinsichtlich ihres Schmelzpunktes aufeinander abgestimmt. Genauer gesagt ist die Schmelztemperatur des Verstärkungsmaterials 11 stets deutlich kleiner, vorzugsweise um mindestens 5 Kelvin kleiner als die Schmelztemperatur des Spritzgußmaterials 2. Ganz besonders vorteilhaft ist es, wenn die Schmelztemperatur des Verstärkungsmaterials 11 mindestens 30 Kelvin kleiner ist als die Schmelztemperatur des Spritzgußmaterials 2.

Beispielsweise handelt es sich bei dem Verstärkungsmaterial 11 um Woodsches Metall oder ein ähnliches Material mit niedrigerem Schmelzpunkt. Bei Woodschem Metall handelt es sich um eine Bismutlegierung, die bei etwa 60 °C schmilzt. Damit genügt bereits heißes Wasser, um es zu schmelzen.

Die zum Erstellen der Hüllenverstärkung 12 verwendete Verstärkungsmasse ist vorzugsweise wiederverwendbar, d.h. das Verstärkungsmaterial 11 kann nach dem Abschmelzen der Hüllenverstärkung 12 während der Entformung des Bauteils 3 vollständig oder wenigstens nahezu vollständig für das Erstellen einer anderen Hüllenverstärkung 12 wiederverwendet werden.

Gemäß einer bevorzugten Ausführungsform der Erfindung erfolgt der Aufbau der Hülle 6 bzw. der Teilhülle 7 mittels additiver Fertigung.

Das Erstellen der Hülle 6 bzw. der Teilhülle 7 erfolgt vorzugsweise durch ein additives Herstellungsverfahren, insbesondere durch ein Schichtbauverfahren, bei dem Schichten eines Aufbaumaterials 4 sukzessive übereinander aufgetragen werden, wobei vor dem Auftragen der jeweils nächsten Schichten die dem Querschnitt der zu fertigenden Hülle 6, 7 entsprechenden Stellen in den jeweiligen Schichten selektiv verfestigt werden, beispielsweise durch lokales Erhitzen eines pulverförmigen Schichtrohmaterials 4 mit Hilfe einer Strahlungsquelle. Verschiedene auf dem Prinzip des Schichtaufbaus beruhende additive Fertigungsverfahren und Anlagen 14 zu deren Durchführung sind aus dem Stand der Technik bekannt, so beispielsweise Stereolithographie, selektives Laserschmelzen, selektives Maskensintern usw.

Ein solcher additiver Aufbau ist insbesondere bei komplexen Bauteilformen vorteilhaft, da dann ein Aufbau der Hülle 6 bzw. der Teilhülle 7 mit konventionellen Methoden (z. B. Fräsen) nicht oder nur mit sehr großem Fertigungsaufwand möglich ist.

Gemäß einer bevorzugten Ausführungsform der Erfindung umfaßt das Verfahren zum Herstellen der Einmalform 1 das vorherige Erstellen eines die Hülle 6 oder die Teilhülle 7 definierenden Datenmodells 15 und/oder Erstellen von Steuerungsdaten 16 zur Steuerung einer Anlage 14 zum Erstellen der Hülle 6 oder der Teilhülle 7 auf der Grundlage eines die Hülle 6 oder die Teilhülle 7 definierenden Datenmodells 15.

Zur Steuerung der Anlage 14 zur additiven Fertigung der Hülle 6 oder der Teilhülle 7, insbesondere einer Schichtbauanlage, werden Steuerungsdaten 16 verwendet. Diese Steuerungsdaten 16 umfassen ein Datenmodell 15 zur Beschreibung der herzustellenden Hülle 6 oder Teilhülle 7 bzw. werden unter Verwendung eines solchen Datenmodells 15 erzeugt. Das Erstellen des Datenmodells 15 und/oder der Steuerungsdaten 16 erfolgt vorzugsweise computergestützt in einer vorzugsweise mit der Anlage 14 verbundenen oder verbindbaren Steuereinheit 17 unter Verwendung einer geeigneten Software und entweder voll- oder teilautomatisiert auf der Grundlage von Zieldaten, welche die Form und andere Eigenschaften des herzustellenden Spritzgußbauteils 3 beschreiben.

Unter Verwendung eines zuvor mit Hilfe eines Computerprogramms 18, gegebenenfalls unter Verwendung von Meß- oder Sensordaten erzeugten Datenmodells 15 werden, vorzugsweise in einer Steuereinheit 17 einer Schichtbauanlage 14, Steuerungsdaten zur Steuerung der Schichtbauanlage 14 erzeugt. Die unter Verwendung dieser Steuerungsdaten 16 angesteuerte Schichtbauanlage 14 erzeugt unter Ausführung eines Schichtaufbauverfahrens ein durch das Datenmodell 15 beschriebenes Hüllenbauteil 6, 7.

Das Datenmodell 15 und/oder die Steuerungsdaten 16 sind dabei vorteilhafterweise in einem universell einsetzbaren, standardisierten Datenformat gefaßt, das unabhängig von dem gewählten Aufbauverfahren einsetzbar ist.

Gemäß einer bevorzugten Ausführungsform der Erfindung erfolgt das Erstellen der Hüllenverstärkung 12 durch Umgießen der Hülle 6, 9 mit einer Verstärkungsmasse 11.

Das Erstellen der Hüllenverstärkung 12 erfolgt vorzugsweise nicht räumlich getrennt von der Hülle 6, 9, sondern unmittelbar und direkt an der fertig erstellen Hülle 6, 9, nämlich durch Umschließen bzw. Einschließen der Hülle 6, 9. In einer bevorzugten Ausführungsform der Erfindung erfolgt das Erstellen der Hüllenverstärkung 12 durch Umgießen der hergestellten festen Hülle 6, 9 mit einer flüssigen Verstärkungsmasse 11.

Besonders vorteilhaft ist es, wenn die Verstärkungsmasse 11 in ein Aufnahmegefäß 21 gefüllt wird, in dem die Hülle 6, 9 angeordnet ist, wobei das Aufnahmegefäß 21 vorzugsweise in eine für die Ausführung des Spritzgußvorgangs geeignete Spritzgußvorrichtung 22 einsetzbar ist.

Das Umgießen der Hülle 6, 9 mit der Verstärkungsmasse 11 erfolgt also vorzugsweise derart, daß die Hülle 6, 9 in einem beispielsweise zylinderförmigen Gefäß 21 angeordnet ist und das Gefäß 21 mit der (heißen) flüssigen Verstärkungsmasse 11 befüllt wird. Das Gefäß 21 wird dabei vorzugsweise so voll befüllt, daß die Hülle 6, 9 vollständig von der Verstärkungsmasse 11 bedeckt ist.

Ein solches Aufnahmegefäß 21 dient nach Art einer Spritzgußpatrone der einfachen Handhabbarkeit der fertigen Spritzgußform 1. Die so hergestellte Patrone 21 kann auf einfache und kostengünstige Weise gelagert, transportiert und in die Spritzgußvorrichtung 22 eingelegt bzw. wieder aus der Spritzgußvorrichtung 22 entnommen werden. Das Aufnahmegefäß 21 ist mit anderen Worten vorzugsweise als unkompliziert handhabbares Austausch- oder Wechselteil für eine Spritzgußvorrichtung 22 ausgebildet.

Vorzugsweise ist die Verwendung eines Aufnahmegefäßes 21 aus Stabilitätsgründen erforderlich. Wenn die Hüllenverstärkung massiv genug ausgeführt ist, wäre das Verstärkungsmaterial 11 nach seinem Erstarren aber auch ohne das Aufnahmegefäß 21 stabil genug, um den Spritzdruck aufzunehmen bzw. auszuhalten. Die Verwendung der Spritzgußform 1 im Inneren der Patrone 21 ist daher nicht zwingend notwendig. Die fertige Einmalform 1, deren äußere Form von der Gestaltung des Aufnahmegefäßes 21 abhängt, kann auch auf andere Weise, insbesondere ohne die Patrone 21, in die Spritzgußvorrichtung 22 integriert werden. Es ist jedoch für den Ablauf des Verfahrens von Vorteil, wenn das Aufnahmegefäß 21, in dessen Inneren die Spritzgußform 1 durch Anbringen der Hüllenverstärkung 12 fertiggestellt wird, zugleich für den Spritzgußvorgang verwendet wird, die Spritzgußform 1 also nicht mehr aus dem Aufnahmegefäß 21 entnommen wird sondern darin bis zum Abschluß des Spritzgußvorgangs verbleibt.

Die nachfolgend beschriebene Vorrichtung dient zur Herstellung einer Einmalform 1 für einen Spritzgußvorgang, bei welchem Spritzgußvorgang unter Verwendung eines Spritzgußmaterials 2 ein Spritzgußbauteil 3 hergestellt wird, insbesondere nach dem zuvor beschriebenen Verfahren.

Die Vorrichtung umfaßt entweder Mittel 14, 15, 16, 17, 18 zum Erstellen einer die Kavität 5 für ein Spritzgußbauteil 3 bildenden Hülle 6 aus einem löslichen Hüllenmaterial 4. Oder aber die Vorrichtung umfaßt Mittel 14, 15, 16, 17, 18 zum Erstellen eines Teils 7 einer die Kavität 5 für ein Spritzgußbauteil 3 bildenden Hülle 9 aus einem löslichen Hüllenmaterial 4 und Mittel zum Erstellen der Hülle 9 unter Verwendung dieser Teilhülle 7. In beiden Fällen sind die Mittel 14, 15, 16, 17, 18 derart ausgeführt, daß das zum Erstellen der Hülle 6, 7 verwendete Hüllenmaterial 4 in einem Lösungsmittel 30 auflösbar ist, in welchem sich das Spritzgußmaterial 2 nicht oder nur sehr viel schwerer auflöst.

Darüber hinaus umfaßt die Vorrichtung Mittel zum Erstellen einer die Hülle 6, 9 im wesentlichen vollständig umschließenden Hüllenverstärkung 12 aus einem schmelzbaren Verstärkungsmaterial 11, wobei das Verstärkungsmaterial 11 einen niedrigeren Schmelzpunkt aufweist als das Spritzgußmaterial 2.

Nachfolgend ist die Einmalform 1 für einen Spritzgußvorgang beschrieben, bei dem unter Verwendung eines Spritzgußmaterials 2 ein Spritzgußbauteil 3 hergestellt wird. Vorzugsweise ist die Einmalform 1 dabei entweder nach dem oben beschriebenen Verfahren oder mit Hilfe der oben beschriebenen Vorrichtung hergestellt.

Die Einmalform 1 ist dadurch gekennzeichnet, daß sie eine Hülle 6, 9 und eine die Hülle 6, 9 im wesentlichen vollständig umschließende Hüllenverstärkung 12 umfaßt, wobei die Hülle 6, 9 vollständig oder teilweise aus einem löslichen Hüllenmaterial 4 besteht, welches Hüllenmaterial 4 in einem Lösungsmittel 30 auflösbar ist, in welchem sich das Spritzgußmaterial 2 nicht auflöst, und wobei die Hüllenverstärkung 12 aus einem schmelzbaren Verstärkungsmaterial 11 besteht, welches einen niedrigeren Schmelzpunkt aufweist als das Spritzgußmaterial 2.

In einer besonders einfachen Ausführungsform der Erfindung besteht die Einmalform 1 (Einmalwerkzeug) ausschließlich aus der Hülle 6, 9 und der Hüllenverstärkung 12.

Gemäß einer bevorzugten Ausführungsform der Erfindung beträgt die Wandstärke der Hülle 6 oder der Teilhülle 7 zwischen 0,025 und 30 mm. Besonders bevorzugt ist eine Wandstärke zwischen 0, 1 und 2 mm.

Die Hülle 6, 7 ist vergleichsweise dünn. Es wird eine minimale Stärke der Hüllenwand 23 (Dicke der Hülle) angestrebt. Die Wandstärke ist vorzugsweise lediglich so stark bemessen, daß die Hülle 6, 7 in sich stabil ist. Außerdem ist die Wandstärke so gewählt, daß sie das Anbringen der Hüllenverstärkung 12 unbeschadet übersteht, insbesondere den Druck beim Umgießen der Hülle 6, 7 mit der Hüllenverstärkung 12 aushält. Die Wandstärke ist zudem vorzugsweise so gewählt, daß die Hülle 6, 7 selbsttragend ist. Die für den Spritzgußvorgang benötigte mechanische Festigkeit der Hülle 6, 7 wird allerdings erst durch das Umschließen der Hülle 6, 9 mit der Hüllenverstärkung 12 erreicht.

Aufgrund der geringen Wandstärke der Hüllenwand 23 ergibt sich ein vergleichsweiser geringer Materialbedarf für die individuell hergestellte Hülle 6 bzw. Teilhülle 7. Dadurch sind die Herstellungskosten für die Spritzgußform 1 vergleichsweise gering. Im Zusammenhang mit dem wiederverwendbaren Verstärkungsmaterial 11 (siehe unten) sind die Kosten der Herstellung des Bauteils 3 im Vergleich mit anderen Herstellungsmethoden gering, trotzdem bei der Entformung des Bauteils 3 eine vollständige oder zumindest teilweise Zerstörung der Spritzgußform 1 (Hüllenverstärkung 12 und Hülle 6 bzw. Teilhülle 7) erfolgt, es sich also hinsichtlich der Spritzgußform 1 insgesamt stets um eine Einmalform handelt, die Losgröße mit anderen Worten immer 1 ist.

Die geringe Wandstärke der Hülle 6, 7 ermöglicht auch ein besonders schnelles Auflösen des Hüllenmaterials 4 während der Entformung des Bauteils 3.

Gemäß einer bevorzugten Ausführungsform der Erfindung ist die Hülle 6 einteilig ausgeführt.

Wird die vollständige Hülle 6 individuell erstellt und nicht nur eine Teilhülle 7, dann ist diese vollständige Hülle 6 vorzugsweise einteilig aufgebaut.

Wird hingegen lediglich eine Teilhülle 7 erstellt, dann ist die Gesamthülle 9 mehrteilig ausgeführt, wie oben bereits beschrieben. In diesem Fall können vor dem Verstärken der Hülle 9, z.B. durch ein Umgießen der Hülle 9 mit Verstärkungsmaterial 11, als Hüllenteile 7 zuvor individuell angefertigte Einlegeteile oder dergleichen in die Grundhülle 8 eingebracht werden.

Gemäß einer bevorzugten Ausführungsform der Erfindung weist die Hülle 6, 9 wenigstens eine Öffnung auf.

Die Hülle 6, 9 hat wenigstens eine Öffnung 24, nämlich die Öffnung für den späteren Anguß, durch den bei dem Spritzgußvorgang die Schmelze 2 mit hohem Druck in den formgebenden Hohlraum 5 der Spritzgußform 1 gedrückt wird. Die Öffnung 24 wird vorzugsweise bereits bei der Hüllenfertigung erstellt. Die Öffnung 24 kann aber auch in einem Zwischenschritt nach der Hüllenfertigung und vor dem Anbringen der Hüllenverstärkung 12 hergestellt werden, z. B. durch Bohren oder Fräsen.

Die Hülle 6, 9 kann mehrere, insbesondere zwei Öffnungen aufweisen, nämlich zusätzlich zu der Öffnung 24 für den Anguß eine Öffnung 25 für die Entlüftung, insbesondere für einen an der Hülle 6, 9 anbringbaren Entlüftungskanal 26 zum Entlüften der Hülle 6, 9 während des Spritzgußvorgangs.

Die weitere Öffnung 25 kann aber auch für einen Vakuumkanal verwendet werden, um vor dem Spritzgußvorgang im Inneren 5 der Hülle 6, 9 ein Vakuum zu erzeugen. Damit kann die Prozeßsicherheit des Füllvorgangs beim Spritzguß erhöht werden.

Die Erfindung betrifft auch die Verwendung einer Einmalform, insbesondere einer oben beschriebenen Einmalform 1, zur Herstellung eines Spritzgußbauteils 3 mittels eines Spritzgußvorgangs.

Das nachfolgend beschriebene Verfahren dient zur Herstellung eines Spritzgußbauteils 3 mit Hilfe eines Spritzgußvorgangs. Dabei kommt vorzugsweise eine Einmalform 1 zur Anwendung, wie sie unter Verwendung des oben beschriebenen Verfahrens oder der oben beschriebenen Vorrichtung hergestellt wurde.

Das Verfahren umfaßt das Erstellen eines Spritzgußbauteils 3 durch Einspritzen einer Formmasse aus einem Spritzgußmaterial 2 in die Einmalform 1, und das Entformen des Spritzgußbauteils 3, wobei das Entformen sowohl das Entfernen der Hüllenverstärkung 12 durch Abschmelzen des Verstärkungsmaterials 11 als auch das Entfernen der Hülle 6 oder der Teilhülle 7 durch Auflösen des Hüllenmaterials 4 in einem Lösungsmittel 30 beinhaltet.

Das ist das Spritzgußverfahren "im engeren Sinn". Im weiteren Sinn umfaßt das Gesamtverfahren auch die Herstellung der Einmalform 1, wie oben beschrieben.

Das Erstellen eines Spritzgußbauteils 3 aus einem Spritzgußmaterial 2 erfolgt durch Einspritzen einer Formmasse in die durch die verstärkte Hülle gebildete Spritzgußform 1.

Das verwendete Spritzgußmaterial 2 hat einen höheren Schmelzpunkt als das Verstärkungsmaterial 11 und wird nicht bzw. nur sehr viel schwerer im Lösungsmittel 30 des Hüllenmaterials 4 gelöst.

Die Entformung des Spritzgußbauteils 3 erfolgt zum einen durch Entfernen der Hüllenverstärkung 12, nämlich durch Abschmelzen des Verstärkungsmaterials 11 bei einer Temperatur unterhalb des Schmelzpunktes des Spritzgußmaterials 2. Zu diesem Zweck wird eine Wärmebehandlung der Hüllenverstärkung 12 durchgeführt. Dabei können unterschiedliche, dem Fachmann geläufige Arten der Wärmebehandlung bzw. der Wärmezufuhr auf die Hüllenverstärkung 12 angewendet werden.

Zum anderen erfolgt die Entformung durch Entfernen der Hülle 6 bzw. der Teilhülle 7, nämlich durch Auflösen des Hüllenmaterials 4 in dem Lösungsmittel 30, in dem sich das Spritzgußmaterial 2 nicht oder sehr viel schlechter auflöst. Zu diesem Zweck wird die von der Hüllenverstärkung 12 befreite Hülle 6, 9 vorzugsweise in ein Lösungsmittelbad getaucht. Verschiedene andere Möglichkeiten zur Bereitstellung eines Lösungsmittels 30 zum Auflösen des Hüllenmaterials 11 sind dem Fachmann geläufig und können auf die Hülle 6, 9 angewendet werden.

Kommt lediglich eine individualisierte Teilhülle 7 zur Anwendung, wird diese aufgelöst und die verbleibende Grundhülle 8, die vorzugsweise als klassisches Dauerwerkzeug ausgeführt ist, wird auf bekannte Weise geöffnet, um das Spritzgußbauteil 3 freizugeben. In diesem Fall muß die lediglich teilindividualisierte Hülle 9 auch nicht vollständig von dem Verstärkungsmaterial 11 umhüllt sein. Es ist ausreichend, wenn lediglich derjenige Bereich der Hülle 9, der die individualisierte Teilhülle 7 aufweist, mit der Hüllenverstärkung 12 versehen ist. Entsprechend muß beim Entformen auch das Abschmelzen und Auflösen von Hüllenverstärkung 12 und Teilhülle 7 nur in diesem Bereich der Hülle 9 erfolgen. Mit anderen Worten kann der Entformungsvorgang, ebenso wie die Anwendung der Hüllenverstärkung 12, lokal auf den Bereich der Teilhülle begrenzt sein.

Das Entformen erfolgt vorzugsweise in einer von der Spritzgußvorrichtung 22 getrennten Anlage 28. Hierzu wird das Spritzgußbauteil 3, der sich vorzugsweise im Inneren 29 der Spritzgußpatrone 21 oder eines anderweitig ausgebildeten Gefäßes befindet, aus der Spritzgußvorrichtung 22 entnommen und einer Anlage 28 zum Entformen und/oder Nachbehandeln zugeführt.

Das nach dem Entformen gewonnene Spritzgußbauteil 3 kann anschließend als fertiges Bauteil verwendet werden oder aber es dient als eine Komponente zur Erstellung einer mehrkomponentigen Bauteilekombination.

In einem sehr einfachen Fall erfolgt das Entformen in heißem Wasser, wobei das Wasser zunächst als Wärmeträger zum Eintrag von Schmelzenergie in die Hüllenverstärkung 12 und damit zum Abschmelzen des Verstärkungsmaterials 11 und anschließend als Lösungsmittel 30 zum Auflösen des Hüllenmaterials 4 dient.

Gemäß einer bevorzugten Ausführungsform der Erfindung wird das während des Entformens des Spritzgußbauteils 3 geschmolzene Verstärkungsmaterial 11 der Hüllenverstärkung 12 zumindest teilweise zum Erstellen einer Hüllenverstärkung 12 bei der Herstellung einer weiteren Einmalform 1 wiederverwendet.

Vorzugsweise wird dabei das gesamte oder nahezu das gesamt abgeschmolzene Verstärkungsmaterial 11 wiederverwendet, ggf. nach einer Reinigung des Materials in einem Zwischenschritt.

Die nachfolgend beschriebene Vorrichtung dient zur Herstellung eines Spritzgußbauteils 3 mit Hilfe eines Spritzgußvorgangs unter Verwendung einer Einmalform 1, wie oben beschrieben.

Die Vorrichtung umfaßt Mittel 22 zum Einspritzen einer Formmasse aus einem Spritzgußmaterial 2 in die Einmalform 1 zum Erstellen eines Spritzgußbauteils 3. Außerdem umfaßt die Vorrichtung Mittel 28 zum Entfernen der Hüllenverstärkung 12 durch Abschmelzen des Verstärkungsmaterials 11 und Mittel 28 zum Entfernen der Hülle 6 oder der Teilhülle 7 durch Auflösen des Hüllenmaterials 4 in einem Lösungsmittel 30 zum Entformen des Spritzgußbauteils 3.

Die Mittel 22, 28 können in voneinander getrennten Anlagen verwirklicht sein. Insbesondere können die Mittel 28 zum Entformen räumlich getrennt von der Spritzgußvorrichtung 22 angeordnet sein. Ein Tauchbad 31 mit einem erwärmten Lösungsmittel 30 zur Durchführung der Entformung kann beispielsweise in einem zu der Spritzgußvorrichtung 22 benachbarten Nebenraum angeordnet sein. Das Entformen kann nicht nur räumlich getrennt, sondern auch mit großem zeitlichen Abstand zu dem Spritzgußvorgang stattfinden.

Schließlich betrifft die Erfindung auch ein nach dem oben beschrieben Verfahren oder mit der oben beschriebenen Vorrichtung hergestelltes Spritzgußbauteil 3.

Die Erfindung betrifft zudem eine Spritzgußvorrichtung 22 zur Herstellung eines Spritzgußbauteils 3 mit Hilfe eines Spritzgußvorgangs, ausgebildet zur wechselnden Aufnahme von Einmalformen, insbesondere der oben beschriebenen Einmalformen 1. Ein solches (Schnell-)Wechselsystem läßt sich besonders vorteilhaft mit den oben beschriebenen Patronen 21 verwirklichen, insbesondere wenn die Patronen 21 eine genormte Größe aufweisen. Das schließt nicht aus, daß es zur Minimierung des Materialeinsatzes für das Verstärkungsmaterial 11 Patronen 21 in unterschiedlichen Normgrößen gibt, zu welchem Zweck das Wechselsystem der Spritzgußvorrichtung 22 unterschiedlich große Aufnahmeeinrichtungen für die Patronen 21 bereitstellen kann.

Außerdem betrifft die Erfindung auch ein Verfahren zum Entformen eines mit Hilfe eines Spritzgußvorgangs hergestellten Spritzgußbauteils 3 aus oben beschriebenen Einmalform 1, bei dem die Hüllenverstärkung 12 durch Abschmelzen des Verstärkungsmaterials 11 und die Hülle 6 oder die Teilhülle 7 durch Auflösen des Hüllenmaterials 4 in einem Lösungsmittel 30 entfernt werden.

Nachfolgend werden die Prozeßschritte eines vollständigen Kreislaufs angegeben:
- Erstellen eines die Hülle 6 oder die Teilhülle 7 definierenden Datenmodells 15 und/oder Erstellen von Steuerungsdaten 16 zur Steuerung einer Anlage 14 zum Erstellen der Hülle 6 oder der Teilhülle 7 auf der Grundlage eines die Hülle 6 oder die Teilhülle 7 definierenden Datenmodells 15,
- Erstellen einer die Kavität 5 für ein Spritzgußbauteil 3 bildenden Hülle 6 aus einem löslichen Hüllenmaterial 4 mittels additiver Fertigung oder Erstellen eines Teils 7 einer die Kavität 5 für ein Spritzgußbauteil 3 bildenden Hülle 9 aus einem löslichen Hüllenmaterial 4 mittels additiver Fertigung und Erstellen einer Hülle 9 unter Verwendung dieser Teilhülle 7,
- Erstellen einer die Hülle 6, 9 im wesentlichen vollständig umschließenden Hüllenverstärkung 12 aus einem schmelzbaren Verstärkungsmaterial 11, wobei das Verstärkungsmaterial 11 einen niedrigeren Schmelzpunkt aufweist als das Spritzgußmaterial 2,
- Erstellen eines Spritzgußbauteils 3 durch Einspritzen einer Formmasse aus einem Spritzgußmaterial 2 in die Einmalform 1,
- Entformen des Spritzgußbauteils 3 durch Entfernen der Hüllenverstärkung 12 durch Abschmelzen des Verstärkungsmaterials 11 und Entfernen der Hülle 6 oder der Teilhülle 7 durch Auflösen des Hüllenmaterials 4 in einem Lösungsmittel 30,
- zumindest teilweises Wiederverwenden des während des Entformens des Spritzgußbauteils 3 abgeschmolzenen Verstärkungsmaterials 11 der Hüllenverstärkung 12 zum Erstellen einer Hüllenverstärkung 12 bei der Herstellung einer weiteren Einmalform 1.

Zusammenfassend betrifft die Erfindung die Herstellung von Spritzgußbauteilen 3 in Einmalformen 1. Um individuelle Spritzgußbauteile 3 kostengünstig herzustellen, wird die Verwendung einer aus zwei Elementen (Hülle 6, 7 und Hüllenverstärkung 12) aufgebauten Spritzgußform 1 vorgeschlagen. Beide Elemente der Spritzgußform 1 sind aus Materialien hergestellt, die bestimmte Materialeigenschaften (Löslichkeit und Schmelztemperatur) aufweisen müssen. Die Auswahl dieser Materialien 4, 11 hängt von den Materialeigenschaften des verwendeten Spritzgußmaterials 2 ab. Geeignete Materialien und Materialkombinationen, auch andere als die oben genannten, können von einem Fachmann unter Berücksichtigung der beschriebenen Anforderungen und ihrer Eignung für die Spritzgußtechnik ausgewählt werden.

Teile der erfindungsgemäßen Verfahren können rechnergestützt durchgeführt werden. Dies betrifft u.a. das Verfahren zum Erzeugen einer Spritzgußform 1, dort insbesondere die Erzeugung eines Datensatzes 15 zur Beschreibung der Hülle 6 bzw. des Hüllenteils 7 sowie die Erzeugung von Steuerungsdaten 16. Dies betrifft außerdem die Steuerung einer Anlage 14 zur additiven Fertigung zur Herstellung der Spritzgußform 1 sowie die Steuerung einer Spritzgußvorrichtung 22 zur Durchführung des Spritzgußvorgangs zum Erzeugen eines Spritzgußbauteils 3. Eine zur Durchführung der erfindungsgemäßen Verfahren geeignete Vorrichtung läßt sich im Wesentlichen durch die Bereitstellung eines geeigneten Computerprogramms realisieren.

### Bezugszeichenliste

- 1: Spritzgußform, Einmalform
- 2: Spritzgußmasse, Spritzgußmaterial
- 3: Spritzgußbauteil
- 4: Hüllenmaterial
- 5: Kavität, Hohlraum
- 6: vollständig individualisierte Hülle
- 7: individualisierte Teilhülle
- 8: standardisierte Grundhülle
- 9: teilweise individualisierte Hülle
- 10: (frei)
- 11: Verstärkungsmasse, Verstärkungsmaterial
- 12: Hüllenverstärkung
- 13: Hüllenaußenseite
- 14: Anlage zur additiven Fertigung
- 15: Datenmodell
- 16: Steuerungsdaten
- 17: Steuereinheit, Recheneinheit
- 18: Computerprogramm
- 19: (frei)
- 20: (frei)
- 21: Aufnahmegefäß, Patrone
- 22: Spritzgußvorrichtung
- 23: Hüllenwand
- 24: Öffnung, Anguß
- 25: Öffnung, Entlüftung
- 26: Entlüftungskanal
- 27: (frei)
- 28: Entformungsanlage
- 29: Gefäßinnere
- 30: Lösungsmittel
- 31: Tauchbad mit heißem Wasser

## Patentansprüche

1. Verfahren zur Herstellung einer Einmalform (1) für einen Spritzgußvorgang, bei welchem Spritzgußvorgang unter Verwendung eines Spritzgußmaterials (2) ein Spritzgußbauteil (3) hergestellt wird, mit den Schritten:
a) Erstellen einer die Kavität (5) für ein Spritzgußbauteil (3) bildenden Hülle (6) aus einem löslichen Hüllenmaterial (4),
oder
Erstellen eines Teils (7) einer die Kavität (5) für ein Spritzgußbauteil (3) bildenden Hülle (9) aus einem löslichen Hüllenmaterial (4) und Erstellen einer Hülle (9) unter Verwendung dieser Teilhülle (7),
wobei das Hüllenmaterial (4) in einem Lösungsmittel (30) auflösbar ist, in welchem sich das Spritzgußmaterial (2) nicht auflöst, und
b) Erstellen einer die Hülle (6, 9) im wesentlichen vollständig umschließenden Hüllenverstärkung (12) aus einem schmelzbaren Verstärkungsmaterial (11), wobei das Verstärkungsmaterial (11) einen niedrigeren Schmelzpunkt aufweist als das Spritzgußmaterial (2).

2. Verfahren nach Anspruch 1, wobei der Aufbau der Hülle (6) bzw. der Teilhülle (7) mittels additiver Fertigung erfolgt.

3. Verfahren nach Anspruch 1 oder 2, mit dem folgenden, den Schritten a) und b) vorangehenden Schritt:
- Erstellen eines die Hülle (6) oder die Teilhülle (7) definierenden Datenmodells (15) und/oder Erstellen von Steuerungsdaten (16) zur Steuerung einer Anlage (14) zum Erstellen der Hülle (6) oder der Teilhülle (7) auf der Grundlage eines die Hülle (6) oder die Teilhülle (7) definierenden Datenmodells (15).

4. Verfahren nach einem der Ansprüche 1 bis 3, wobei das Erstellen der Hüllenverstärkung (12) durch Umgießen der Hülle (6, 9) mit einer Verstärkungsmasse (11) erfolgt, wobei vorzugsweise die Verstärkungsmasse (11) in ein Aufnahmegefäß (21) gefüllt wird, in dem die Hülle (6, 9) angeordnet ist, wobei das Aufnahmegefäß (21) vorzugsweise in eine für die Ausführung des Spritzgußvorgangs geeignete Spritzgußvorrichtung (22) einsetzbar ist.

5. Einmalform (1) für einen Spritzgußvorgang, bei dem unter Verwendung eines Spritzgußmaterials (2) ein Spritzgußbauteil (3) hergestellt wird,
**dadurch gekennzeichnet, daß** die Einmalform (1) eine Hülle (6, 9) und eine die Hülle (6, 9) im wesentlichen vollständig umschließende Hüllenverstärkung (12) umfaßt,
wobei die Hülle (6, 9) vollständig oder teilweise aus einem löslichen Hüllenmaterial (4) besteht, welches Hüllenmaterial (4) in einem Lösungsmittel (30) auflösbar ist, in welchem sich das Spritzgußmaterial (2) nicht auflöst, und
wobei die Hüllenverstärkung (12) aus einem schmelzbaren Verstärkungsmaterial (11) besteht, welches einen niedrigeren Schmelzpunkt aufweist als das Spritzgußmaterial (2).

6. Einmalform (1) nach Anspruch 5,
**dadurch gekennzeichnet, daß** die Wandstärke der Hülle (6) oder der Teilhülle (7) zwischen 0,025 und 30 mm, vorzugsweise zwischen 0,1 und 2 mm beträgt,
und/oder **dadurch gekennzeichnet, daß** die Hülle (6) einteilig ist,
und/oder **dadurch gekennzeichnet, daß** die Hülle (6, 9) wenigstens eine Öffnung (24, 25) aufweist.

7. Verwendung einer nach einem Verfahren der Ansprüche 1 bis 4 hergestellten Einmalform (1) oder einer Einmalform (1) nach Anspruch 5 oder 6, zur Herstellung eines Spritzgußbauteils (3) mittels eines Spritzgußvorgangs.

8. Verwendung nach Anspruch 7, mit den Schritten
- Erstellen eines Spritzgußbauteils (3) durch Einspritzen einer Formmasse aus einem Spritzgußmaterial (2) in die Einmalform (1), und
- Entformen des Spritzgußbauteils (3) durch
Entfernen der Hüllenverstärkung (12) durch Abschmelzen des Verstärkungsmaterials (11) und
Entfernen der Hülle (6) oder der Teilhülle (7) durch Auflösen des Hüllenmaterials (4) in einem Lösungsmittel (30) .

9. Verwendung nach Anspruch 8, **dadurch gekennzeichnet, daß** das während des Entformens des Spritzgußbauteils (3) geschmolzene Verstärkungsmaterial (11) der Hüllenverstärkung (12) zumindest teilweise zum Erstellen einer Hüllenverstärkung (12) bei der Herstellung einer Einmalform (1) nach einem Verfahren der Ansprüche 1 bis 4 wiederverwendet wird.

10. Verwendung nach Anspruch 7, bei dem das Spritzgußbauteil (3) aus der Einmalform (1) entformt wird, mit den Schritten:
- Entfernen der Hüllenverstärkung (12) durch Abschmelzen des Verstärkungsmaterials (11) und
- Entfernen der Hülle (6) oder der Teilhülle (7) durch Auflösen des Hüllenmaterials (4) in einem Lösungsmittel (30).

## Claims

1. A method for producing a single-use mold (1) for an injection-molding operation, in which injection-molding operation an injection-molded component (3) is produced using an injection-molding material (2), having the steps of:
a) creating, from a soluble shell material (4), a shell (6) that forms the cavity (5) for an injection-molded component (3),
or
creating, from a soluble shell material (4), a part (7) of a shell (9) that forms the cavity (5) for an injection-molded component (3), and creating a shell (9) using that partial shell (7),
wherein the shell material (4) being soluble in a solvent (30) in which the injection-molding material (2) does not dissolve, and
b) creating, from a meltable reinforcement material (11), a shell reinforcement (12) that substantially completely surrounds the shell (6, 9), the reinforcement material (11) having a lower melting point than the injection-molding material (2).

2. The method according to Claim 1, wherein the shell (6) or the partial shell (7) is constructed by additive manufacturing.

3. The method according to Claim 1 or 2, having the following step that precedes steps a) and b):
creating a data model (15) that defines the shell (6) or the partial shell (7), and/or creating control data (16) for controlling a facility (14) for creating the shell (6) or the partial shell (7) on the basis of a data model (15) that defines the shell (6) or the partial shell (7).

4. The method according to one of Claims 1 to 3, wherein the shell reinforcement (12) is created by encasing the shell (6, 9) in a reinforcement compound (11), the reinforcement compound (11) preferably being introduced into a receiving vessel (21) in which the shell (6, 9) is arranged, the receiving vessel (21) preferably being insertable into an injection-molding apparatus (22) suitable for executing the injection-molding operation.

5. A single-use mold (1) for an injection-molding operation in which an injection-molded component (3) is produced using an injection-molding material (2),
**characterized in that** the single-use mold (1) comprises a shell (6, 9) and a shell reinforcement (12) that substantially completely encloses the shell (6, 9),
wherein the shell (6, 9) is made completely or partly from a soluble shell material (4), which shall material (4) is soluble in a solvent (30) in which the injection-molding material (2) does not dissolve, and
wherein the shell reinforcement (12) is made of a meltable reinforcement material (11) that has a lower melting point than the injection-molding material (2).

6. The single-use mold (1) according to Claim 5,
**characterized in that** the wall thickness of the shell (6) or of the partial shell (7) is between 0,025 and 30 mm, preferably between 0,1 and 2 mm, and/or
**characterized in that** the shell (6) is in one piece, and/or
**characterized in that** the shell (6, 9) has at least one opening (24, 25).

7. Use of a single-use mold (1) produced according to a method of Claims 1 to 4 or of a single-use mold (1) in accordance with Claim 6 or 7, to produce an injection-molded component (3) using an injection-molding operation.

8. Use according to Claim 7, having the steps of:
- creating an injection-molded component (3) by injecting a molding compound, being an injection-molding material (2), into the single-use mold (1), and
- unmolding the injection-molded component (3) by
removing the shell reinforcement (12) by melting away the reinforcement material (11), and
removing the shell (6) or the partial shell (7) by dissolving the shell material (4) in a solvent (3).

9. Use according to Claim 8, **characterized in that** the reinforcement material (11) of the shell reinforcement (12) which is melted during the unmolding of the injection-molded component (3) is reused at least in part for the creation of a shell reinforcement (12) upon production of a single-use mold (1) in accordance with a method of Claims 1 to 4.

10. Use according to Claim 7, wherein the injection-molded component (3) is unmolded from the single-use mold (1), having the steps of:
- removing the shell reinforcement (12) by melting away the reinforcement material (11), and
- removing the shell (6) or the partial shell (7) by dissolving the shell material (4) in a solvent (30).

## Revendications

1. Procédé de fabrication d'un moule à usage unique (1) pour une opération de moulage par injection, opération de moulage par injection au cours de laquelle, par utilisation d'un matériau pour moulage par injection (2), un composant de moulage par injection (3) est fabriqué, comportant les étapes suivantes :
a) réalisation d'une enveloppe (6) formant la cavité (5) pour un composant de moulage par injection (3), en un matériau d'enveloppe soluble (4),
ou
réalisation d'une pièce (7) d'une enveloppe (9) formant la cavité (5) d'un composant de moulage par injection (3), en un matériau d'enveloppe soluble (4) et réalisation d'une enveloppe (9) par utilisation de cette enveloppe partielle (7),
dans lequel le matériau d'enveloppe (4) est soluble dans un solvant (30) dans lequel le matériau pour moulage par injection (2) n'est pas soluble, et
b) réalisation d'un renforcement d'enveloppe (12) entourant pour l'essentiel complètement l'enveloppe (6, 9), en un matériau de renforcement fusible (11), le matériau de renforcement (12) présentant un point de fusion inférieur à celui du matériau pour moulage par injection (2).

2. Procédé selon la revendication 1, dans lequel la construction de l'enveloppe (6) ou de l'enveloppe partielle (7) est réalisée par fabrication additive.

3. Procédé selon la revendication 1 ou 2, comportant l'étape suivante, qui précède les étapes a) et b) :
- réalisation d'un modèle de données (15) définissant l'enveloppe (6) ou l'enveloppe partielle (7) et/ou réalisation de données de pilotage (16) pour piloter une installation (16) destinée à la réalisation de l'enveloppe (6) ou de l'enveloppe partielle (7) sur la base d'un modèle de données (15) définissant l'enveloppe (6) ou l'enveloppe partielle (7).

4. Procédé selon l'une des revendications 1 à 3, dans lequel la réalisation du renforcement d'enveloppe (12) est réalisé par coulée d'une masse de renforcement (11) autour de l'enveloppe (6, 9), dans lequel de préférence la masse de renforcement (11) est placée dans un récipient récepteur (21) dans lequel est disposée l'enveloppe (6, 9), le récipient récepteur (21) pouvant de préférence être utilisé dans un appareillage de moulage par injection (22) convenant à la mise en œuvre de l'opération de moulage par injection.

5. Moule à usage unique pour une opération de moulage par injection, dans lequel on fabrique un composant de moulage par injection (3) par utilisation d'un matériau pour moulage par injection (2),
**caractérisé en ce que** le moule à usage unique (1) comprend une enveloppe (6, 9) et un renforcement d'enveloppe (12) pour l'essentiel entourant complètement l'enveloppe (6, 9),
dans lequel l'enveloppe (6, 9) est en totalité ou en partie constituée d'un matériau d'enveloppe soluble (4), lequel matériau d'enveloppe (4) est soluble dans un solvant (30) dans lequel le matériau pour moulage par injection (2) n'est pas soluble, et
dans lequel le renforcement d'enveloppe (12) est constitué d'un matériau de renforcement fusible (11), qui présente un point de fusion inférieur à celui du matériau pour moulage par injection (2).

6. Moule à usage unique (1) selon la revendication 5, **caractérisé en ce que** l'épaisseur de paroi de l'enveloppe (6) ou de l'enveloppe partielle (7) est comprise entre 0,025 et 30 mm, de préférence entre 0,1 et 2 mm,
et/ou **caractérisé en ce que** l'enveloppe (6) est d'une seule pièce,
et/ou **caractérisé en ce que** l'enveloppe (6, 9) comprend au moins une ouverture (24, 25).

7. Utilisation d'un moule à usage unique (1) fabriqué par un procédé selon les revendications 1 à 4 ou d'un moule à usage unique (1) selon la revendication 5 ou 6, pour fabriquer un composant de moulage par injection (3) à l'aide d'une opération de moulage par injection.

8. Procédé selon la revendication 7, comportant les étapes suivantes :
- réalisation d'un composant de moulage par injection (3) par injection d'un mélange à mouler en un matériau pour moulage par injection (2) dans le moule à usage unique (1), et
- démoulage du composant de moulage par injection (3) par
élimination du renforcement d'enveloppe (12) par fusion du matériau de renforcement (11) et
élimination de l'enveloppe (6) ou de l'enveloppe partielle (7) par dissolution du matériau d'enveloppe (4) dans un solvant (30).

9. Utilisation selon la revendication 8, **caractérisée en ce que** le matériau de renforcement (11) du renforcement d'enveloppe (12), fondu pendant le démoulage du composant de moulage par injection (3), est au moins partiellement réutilisé pour établir un renforcement d'enveloppe (12) lors de la fabrication d'un moule à usage unique (1) par un procédé selon les revendications 1 à 4.

10. Utilisation selon la revendication 7, dans lequel le composant de moulage par injection (3) est démoulé du moule à usage unique (1), par les étapes suivantes :
- élimination du renforcement d'enveloppe (12) par fusion du matériau de renforcement (11) et
- élimination de l'enveloppe (6) ou de l'enveloppe partielle (7) par dissolution du matériau d'enveloppe (4) dans un solvant (30).
